(19) **Europäisches Patentamt / European Patent Office / Office européen des brevets**

(11) **EP 2 248 847 A1**

(12) **EUROPEAN PATENT APPLICATION**
published in accordance with Art. 153(4) EPC

(43) Date of publication:
**10.11.2010 Bulletin 2010/45**

(21) Application number: **09713426.6**

(22) Date of filing: **19.02.2009**

(51) Int Cl.:
*C08J 9/00* (2006.01)  *C08J 9/26* (2006.01)
*C08K 5/09* (2006.01)  *C08L 23/00* (2006.01)
*H01M 2/16* (2006.01)

(86) International application number:
**PCT/JP2009/053477**

(87) International publication number:
**WO 2009/104810 (27.08.2009 Gazette 2009/35)**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(30) Priority: **20.02.2008  JP 2008038888**

(71) Applicant: **Sumitomo Chemical Company, Limited
Tokyo 104-8260 (JP)**

(72) Inventors:
• **SUZUKI, Yutaka**
  **Tsukuba-shi**
  **Ibaraki 305-0044 (JP)**
• **IWATA, Nobuchika**
  **Tsukuba-shi**
  **Ibaraki 305-0003 (JP)**

(74) Representative: **Hart-Davis, Jason et al
Cabinet Beau de Loménie
158, rue de l'Université
75340 Paris Cedex 07 (FR)**

(54) **POROUS FILM, MULTILAYER POROUS FILM COMPRISING THE SAME, AND SEPARATOR**

(57)    A porous film comprising a polyolefin resin, and not less than 0.001% by weight and not more than 2% by weight of at least one fatty acid component selected from the group consisting of saturated fatty acids, unsaturated fatty acids and metal salts of saturated or unsaturated fatty acids, the number of the carbon atoms of the fatty acid component being within the range of not less than 12 and not more than 24.

Fig. 1

## Description

### FIELD OF THE INVENTION

The present invention relates to a porous film. The present invention also relates to a multilayer porous film. The present invention further relates to a separator.

### BACKGROUND ART

Porous films are used for disposable diapers and medical sheets, and are also used for various applications such as separators for power storage devices including batteries and capacitors. As the porous film, there is proposed a porous film for a separator which is produced by stretching a sheet made from a water-soluble filler and a high-molecular-weight polyolefin and then removing the water-soluble filler therefrom witch an aqueous liquid (cf. JP-A-2002-69221). The porous film for a separator is required to be thinner and more uniform in thickness. As a porous film satisfying these requirements, there is proposed a porous film for a separator which is produced by removing a water-soluble filler from a sheet made from the water-soluble filter and a high-molecular-weight, polyolefin with an aqueous liquid and then stretching the resulting film (cf JP-A-2006-307163).

When those porous films are used as separators, however, properties of power storage devices such as a battery are not always satisfactory.

### SUMMARY OF THE INVENTION

An object of the present invention is to provide an excellent porous film, an excellent multilayer porous film and an excellent separator, which can improve the characteristics of a power storage device.

In order to solve the problems described above, the present inventors have made intensive studies and completed the present invention.

Accordingly, the present invention provides the following (1) to (9):

(1) A porous film comprising a polyolefin resin, and not less than 0.001% by weight and not more than 2% by weight of at least one fatty acid component selected from the group consisting of saturated fatty acids, unsaturated fatty acids and metal salts of these fatty acids, the number of the carbon atoms of the fatty acid component being within the range of not less than 12 and not more than 24.

(2) The porous film according to item (1), which is obtainable by shaping a polyolefin resin composition into a sheet, the composition comprising 100 parts by weight of a polyolefin resin, at least one fatty acid component selected from the group consisting of saturated fatty acids, unsaturated fatty acids and metal salts of these fatty acids, the number of the carbon atoms of the fatty acid component being within the range of not less than 12 and not more than 24, and 100 to 400 parts by weight of a water-soluble filler, then bringing the sheet into contact with an aqueous liquid to remove the water-soluble filler from the sheet, and stretching the sheet,

in which film, the residual of the fatty acid component is not less that 0.001% by weight and not more than 2% by weight.

(3) The porous film according to item (1) or (2), wherein the polyolefin resin is a polyethylene resin.

(4) A multilayer porous film in which a porous heat-resistant layer comprising a heat-resistant resin and/or a filler is laminated on the porous film according to any one of items (1) to (3).

(5) The multilayer porous film according to item (4), wherein the heat-resistant, resin is a nitrogen-containing aromatic polymer.

(6) A separator comprising the Porous film according to any one of items (1) to (3).

(7) A separator comprising the multilayer porous film according to item (4) or (5).

(8) A power storage device comprising the separator according to item (6) or (7).

(9) A nonaqueous electrolyte secondary battery comprising the separator according to item (6) or (7).

### BRIEF DESCRIPTION OF THE DRAWING

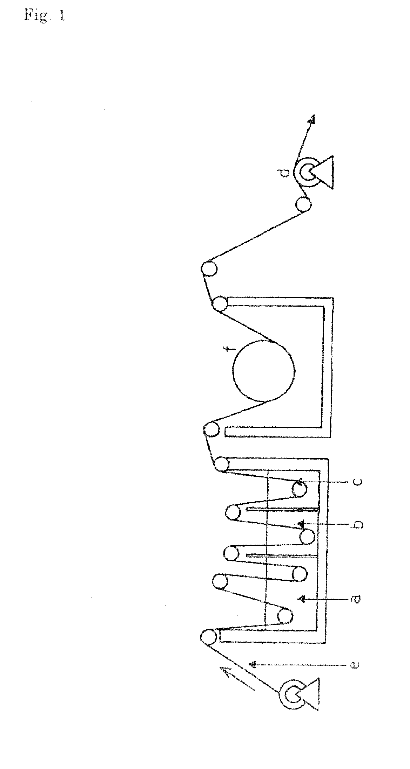

Fig. 1 is a schematic view of an apparatus used in the Examples for removing a water-soluble filler from a sheet obtained by shaping a polyolefin resin composition.

Description of the Symbols

a: Aqueous acid solution bath
b: Aqueous alkali solution bath
c: Water bath
d: Winder
e: Sheet produced by shaping polyolefin resin composition
f: Drying drum (heating drum)

BEST EMBODIMENTS FOR CARRYING OUT THE INVENTION

The porous film of the present invention comprises a polyolefin resin, and not less than 0.001% by weight and not more than 2% by weight of at least one fatty acid component selected from the group consisting of saturated fatty acids, unsaturated fatty acids and metal salts of these fatty acids, the number of the carbon atoms of the fatty acid component being within the range of not less than 12 and not more than 24.

The porous film of the present invention can be produced by a method comprising the steps of:

shaping a polyolefin resin composition which comprises 100 parts by weight of a polyolefin resin, at least one fatty acid component selected from the group consisting of saturated fatty acids, unsaturated fatty acids and metal salts of these fatty acids, the number of the carbon atoms of the fatty acid component being within the range of not less than 12 and not more than 24, and 100 to 400 parts by weight of a water-soluble filler into a sheet; and
then bringing the sheet into contact with an aqueous liquid to remove the water-soluble filler from the sheet and stretching the sheet.

The phrase "bringing the sheet into contact with an aqueous liquid to remove the water-soluble filler from the sheet and stretching the sheet" encompasses any order of the process steps, that is, an order in which the water-soluble filler is removed from the sheet produced by shaping the polyolefin resin composition and then the resulting sheet is stretched; an oder in which the sheet is stretched and then the water-soluble filler is removed therefrom and an order in which the water-soluble filler is removed simultaneously with the stretching of the sheet. It is preferable to remove the water-soluble filler and then to stretch the resulting sheet because a porous film having better uniformity in film thickness can be obtained. Hereinafter, the method comprising the steps of removing the water-soluble filler and then stretching the resulting sheet is explained in detail, but the liquid used for removing the water-soluble filler, the procedure of removal of the filler and the procedure of stretching in the case of other order are the same as in this method. The sheet used in the production of the porous film may be a multilayer sheet produced by laminating two or more sheets each produced by shaping the polyolefin resin composition used for the present invention.

The amount of the water-soluble filler contained in the polyolefin resin composition is 100 to 400 parts by weight, preferably 150 to 350 parts by weight, per 100 parts by weight of the polyolefin resin. When the amount of the water-soluble filler contained in the polyolefin resin composition is less than 100 parts by weight, it tends to be difficult to remove the water-soluble filler in a short time from the sheet produced by shaping the polyolefin resin composition, whereas when the amount exceeds 400 parts by weight, the strength of the sheet and the porous film tends to decrease and the handling thereof tends to be difficult.

The thickness of the sheet shaped from the polyolefin resin composition used in the present invention is usually 5 to 200 $\mu$m, preferably 5 to 100 $\mu$m. From the sheet having such a thickness, the water-soluble filler can be efficiently removed in a short time, and the sheet can be easily processed in the stretching step.

The average particle size of the water-soluble filler used in the present invention is measured by the measuring method described later unless otherwise indicated, and it is usually 0.02 to 10 $\mu$m. In particular, when a separator is produced according to the present invention, it is preferable to use a water-soluble filler having an average particle size of 0.04 to 0.5 $\mu$m from the viewpoint of ion permeability of the porous film to be produced.

The water-soluble filler used in the present invention may be an organic filler or an inorganic filler as long as the filler is soluble in any of acidic, neutral and alkaline aqueous liquids. A mixture of two or more of them may also be used. As the organic water-soluble filler, linear polymers having an -OH group, a -COOH group, a -CONH$_2$ group or the like in the polymer molecule and being soluble in an aqueous liquid may be used. Examples thereof include polyacrylic acid, polymethacrylic acid, polyethylene glycol, polypropylene glycol, polyethylene oxide, polyacrylamide, polyvinyl alcohol, and polyvinyl methyl ether.

Examples of the inorganic water-soluble filler soluble in an acidic aqueous liquid include carbonates, hydroxides, etc. Specific examples thereof include calcium carbonate, magnesium carbonate, barium carbonate, zinc oxide, calcium oxide, aluminum hydroxide, magnesium hydroxide, calcium hydroxide, and calcium sulfate. Examples of the inorganic water-soluble filler soluble in an alkaline aqueous liquid include silicic acid and zinc oxide. Examples of the inorganic water-soluble filler soluble in a neutral aqueous liquid include calcium chloride, sodium chloride, and magnesium sulfate. Among them, calcium carbonate is preferably used because it is inexpensive, calcium carbonate having various particle sizes, in particular a minute particle size is readily available, and a removal rate is high when it is removed from the sheet with the aqueous liquid.

The water-soluble filler used in the present invention is usually used in combination with an additive in order to enhance homogenesou mixing during kneading with the polyolefin resin. Specific examples of such combined use inlude the use of the water-soluble filler the surface of which is already treated with the additive in the kneading step: and the use of the polyolefin resin, the water-soluble filler and the additive which are kneaded all together. As the additive (a surface treatment agent or a kneading aid), it is possible to use an additive containing, as a main component, at least one fatty acid component selected from the group consisting of saturated fatty acids having not less than 12 and not more than 24 carbon atoms (e.g., lauric acid, myristic acid, pentadecylic acid, palmitic acid, margaric acid, stearic acid, tuberculostearic acid, arachidic acid, behenic acid, lignoceric acid, etc.); unsaturated fatty acids having not less than 12 and not more than 24 carbon atoms (e.g., palmitoyl acid, oleic acid, vaccenic acid, linoleic acid, linolenic acid, eleostearic acid, icosadienoic acid, icosatrienoic acid, arachidonic acid, etc.); and metal salts of these fatty acids (e.g. sodium stearate, etc.). When the amount of the fatty acid component is too small, it may be difficult to uniformly mix the ingredients upon kneading, whereas when the amount is too large, it may be difficult to thoroughly knead the ingredients because the frictional force between the inner wall of the apparatus and the ingredients to be kneaded (the polyolefin resin, the water-soluble filler, the additives, and the like) lowers in the kneading apparatus. Among them, more effective additives are those containing, as a main component, at least one fatty acid component selected from the group consisting of saturated fatty acids, unsaturated fatty acids and metal salts of these fatty acids, the number of the carbon atoms of the fatty acid component being within the range of not less than 16 and not more than 18, such as palmitic acid, margaric acid, stearic acid, and palmitoyl acid.

In the present invention, the amount of the fatty acid component contained in the porous film is not less than 0.001% by weight and not more than 2% by weight, preferably not less than 0.01% by weight and not more than 0.2% by weight. When the amount of the fatty acid component is too large, the characteristics of the power storage device using the porous film, in particular, as a battery separator, may deteriorate. In the present invention, the source of the fatty acid component is not limited to the additives. As described above, the present inventors have found that the various characteristics of a powder storage device such as a battery can be improved when a porous film comprising a specific fatty acid component in a specific range is used for the power storage device.

When the fatty acid component has not more than 11 carbon atoms or not less than 25 carbon atoms, the uniformity in the pores or the strength of the porous film may be insufficient. However, the porous film may contain such a fatty acid component as long as the effects of the present invention are not impaired.

Examples of the polyolefin resin used in the present invention include homopolymers of olefins such as ethylene, propylene, butene and hexene, copolymers of these monomers, and copolymers of these monomers with non-olefinic monomers. Specific examples of the polyolefin resin include polyethylene resins such as low-density polyethylene, linear polyethylene (an ethylene-$\alpha$-olefin copolymer), and high-density polyethylene, polypropylene resins such as polypropylene and an ethylene-propylene copolymer, poly(4-methylpentene-1), poly(butene-1), and an ethylene-vinyl acetate copolymer. The polyolefin resin used in the present invention preferably contains a polyolefin having a molecular chain length of not less than 2850 nm (hereinafter referred to as an "ultrahigh molecular chain length polyolefin"). When a polyolefin resin containing the ultrahigh molecular chain length polyolefin is used, the obtained porous film has high strength. In particular, when such a film is used as a separator for a battery, a battery having a lower internal resistance can be obtained. The amount of the ultrahigh molecular chain length polyolefin contained in the polyolefin resin is preferably not less than 10% by weight, more preferably not less than 20% by weight, still more preferably not less than 30% by weight.

Generally, in the case of a nonaqueous electrolyte secondary battery such as a lithium ion secondary battery, when an abnormal current flows in the battery due to short circuit between the positive electrode and the negative electrode or the like, it is important to interrupt (shut down) the current to prevent the flow of excessive current. It is therefore required for the battery separator to shut down the current (by clogging micropores in the porous film) at a temperature as low as possible when the temperature exceeds the normal operation temperature of the battery. When the porous film of the present invention is used as a battery separator, the polyethylene resin is preferably used, since the shutdown temperature can be set at about 120 to 170°C. It is also required that, even if the temperature in the battery rises to a certain high temperature after the shutdown, the film is not broken at that temperature (thermal film-breaking temperature) and the shutdown state is maintained; in other words, the separator has high heat resistance. When a multilayer porous film produced by laminating a porous heat-resistant layer containing a heat-resistant resin and/or a filler on the porous film of the present invention is used as the battery separator, the heat resistance of the battery can be further improved.

The polyolefin resin composition used in the present invention preferably contains an olefin wax having a weight average molecular weight of 700 to 6000. The olefin wax is solid at 25°C. A polyolefin resin composition containing an olefin wax has improved stretchability, and the porous film obtained therefrom has high strength. The amount of the olefin wax in the polyolefin resin composition is preferable 5 to 100 parts by weight, more preferably 10 to 70 parts by weight, per 100 parts by weight of the polyolefin resin contained in the resin composition.

Examples of the olefin wax include waxes of polyethylene resins such as low-density polyethylene, linear polyethylene, (an ethylene-α-olefin copolymer), and high-density polyethylene; waxes of polypropylene resins such as polypropylene and an ethylene-propylene copolymer; and waxes of poly(4-methyl-pentene-1), poly(butene-1), and an ethylene-vinyl acetate copolymer.

In the present invention, the molecular chain length, the weight average molecular chain length, the molecular weight and the weight average molecular weight of the polyolefin resin and the olefin wax can be measured by GPC (gel permeation chromatography). The content (% by weight) of the ultrahigh molecular chain length polyolefin in a specific polyolefin resin can be calculated from the integration of a molecular weight distribution curve obtained by the GPC measurement.

The molecular chain length of the polyolefin resin is a molecular chain length in terms of polystyrene as determined by GPC (gel permeation chromatograph) measurement. Specifically, it is a parameter gained by the following procedure.

As a mobile phase for the GPC measurement, a solvent is used, which is capable of dissolving both a test sample to be measured and standard polystyrene having a known molecular weight.

Firstly, plural kinds of standard polystyrenes having different molecular weights are subjected to GPC measurement to measure retention times of the standard polystyrenes. The molecular chain length of each of the standard polystyrenes is calculated using a Q factor of the polystyrene, from which the molecular chain length of each of the standard polystyrenes and the retention time corresponding thereto are attained. The relationship between the molecular weight, the molecular chain length, and the Q factor of the standard polystyrene is as follows:

$$\text{Molecular weight} = \text{Molecular chain length} \times \text{Q factor}$$

Next, the GPC measurement of the test sample is performed to obtain a retention time-eluted component amount curve. When the molecular chain length of the standard polystyrene having the retention time T is L in the GPC measurement of the standard polystyrene, the "molecular chain length in terms of polystyrene" of the component having the retention time T in the GPC measurement of a test sample is assumed to be L. Using this relationship, the molecular chain length distribution of the test sample in terms of polystyrene (the relationship between the molecular chain length and the eluted component amount in terms of polystyrene) can be obtained from the retention time-eluted component amount curve of the test sample.

In the present invention, the amount of polyolefins having a molecular chain length of not less than 2850 nm in the polyolefin resin can be found as the ratio of the value obtained by integrating the molecular chain length-eluted component amount curve, which is obtained by the method described above, in the range corresponding to a molecular chain length of not less than 2850 nm to the value obtained by integrating the curve in the whole range of the curve.

The production method of the polyolefin resin composition of the present invention is not particularly limited. For example, a production method comprises mixing the component materials constituting the polyolefin resin composition such as the polyolefin resin and the water-soluble filler using a mixing apparatus such as a roll, a Banbury mixer, a single screw extruder, or a twin screw extruder. When the materials are mixed, additives such as an antioxidant and a nonionic surfactant may be added, if necessary.

The method of producing a sheet from the polyolefin resin composition used in the present invention is not particularly limited. Examples of such a method include sheet shaping methods such as an inflation method, calendering, T-die extrusion and a skive method.

According to the present invention, the sheet produced by shaping the polyolefin resin composition is brought into contact with an aqueous liquid to remove the water-soluble filler contained in the sheet. Examples of the method of bringing the sheet into contact with the aqueous liquid include a method of showering the sheet with the aqueous liquid, and a method of immersing the sheet in a bath filled with the aqueous liquid. The method of bringing the sheet into contact with the aqueous liquid may be either of a batch process or a continuous process, and the continuous process is preferable from the viewpoint of productivity. Examples of the continuous method include a method of charging the aqueous liquid into a bath equipped with multiple rolls and conveying the sheet With the rotating rolls to pass through the aqueous liquid. Preferable, the sheet is washed with water after the water-soluble filler is removed from the sheet using the aqueous liquid. Although the extent of washing depends on the application of the porous film to be obtained, usually the sheet is washed until the dissolved salts do not precipitate in water used for washing any more. The sheet from which the water-soluble filler is removed is dried at a temperature for a period of time within the ranges in which the properties of the sheet do not change.

The aqueous liquid may be any liquid capable of removing the water-soluble firer contained in the sheet. Examples of such a liquid include acidic aqueous liquids such as an aqueous hydrochloric acid solution and an aqueous sulfuric acid solution; alkaline aqueous liquids such as an aqueous sodium hydroxide solution, an aqueous calcium hydroxide solution, and an aqueous sodium hydrogencarbonate solution; and neutral aqueous liquids such as ion-exchanged water and distilled water. The aqueous liquid may contain various organic solvents.

In order to facilitate the removal of the water-soluble filler, it is preferable to add a surfactant or a water-soluble organic solvent such as methanol, ethanol, isopropanol, acetone or N-methyl pyrrolidone to the aqueous liquid. The surfactant and the organic solvent may be brought into contact with the sheet after the sheet is brought into contact with the aqueous liquid. This contact may be carried out in accordance with the method of bringing the sheet into contact with the aqueous liquid, and subsequently the sheet may be washed with water or the like. Examples of the surfactant include known nonionic surfactants, cationic surfactants and anionic surfactants. Among them, nonionic surfactants are preferable. The nonionic surfactants have an advantage that they are resistant to hydrolysis even if the aqueous liquid is strongly alkaline (a pH of 11 or higher) or strongly acidic (a pH of 3 or less). Specific examples of the nonionic surfactant include polyoxyethylene alkyl ether, polyoxyethylene-polyoxypropylene alkyl ether, polyoxyethylene alkyl phenyl ether, polyethylene glycol fatty acid ester, and polyoxyethylene alkyl amine-fatty acid amide. The amount of the nonionic surfactant added to the aqueous liquid is preferably 0.05 to 10% by weight from the viewpoint of the balance between the effect of increasing the removal rate of the water-soluble filler and the efficiency in removing the surfactant from the sheet from which the water-soluble filler is removed.

The hydrophile-lipophile balance (HLB) of the nonionic surfactant which can be used in the present invention is preferably in the range of 3 to 18, more preferably 5 to 15. The HLB indicates a value showing a balance in strength between hydrophilicity and lipophilocity. When the HLB is too small, water solubility tends to decrease, while when the HLB is too large, it tends to take a long time for the surfactant to penetrate into the sheet due to poor hydrophobicity although the nonionic surfactant has satisfactory water solubility.

The HLB can be calculated according to the following Griffin's formula:

$$\text{HLB} = [(\text{molecular weight of hydrophilic group part in surfactant})/ (\text{molecular weight of whole surfactant})] \times (100/5)$$

With respect to the HLB of a surfactant HLB of which cannot be calculated according to the Griffin's formula described above, HLB is determined by an experiment in which an oil is emulsified with a surfactant having an unknown HLB, the same oil is separately emulsified with each of plural surfactants having known HLBs (surfactants having different HLBs from each other being used), and the obtained HLBs are compared. It is presumed that the HLB of the surfactant having the known HLB which achieves the same emulsion state of the oil as the surfactant having an unknown HLB is the HLB of the latter surfactant.

The sheet produced by shaping the polyolefin resin composition, from which the water-soluble filler is removed by bringing it into contact with the aqueous liquid, is stretched with a tenter, rolls, or an autograph, whereby a porous film can be produced. Alternatively, as described above, the sheet is stretched and then the water-soluble filler is removed therefrom, whereby a porous film can be produced. Further, a porous film can be produced by pershaping simultaneously the stretching of the sheet and the removal of the water-soluble filler. The draw ratio is preferably 2 to 12, more preferably 4 to 10, from the viewpoint of air permeability of the resulting porous film. When the stretched porous film is used as a separator for the power storage device, the thickness thereof depends on the kind and the application of the powder storage device and it is usually 5 to 100 $\mu$m, preferably 5 to 40 $\mu$m, more preferably 5 to 20 $\mu$m. The sheet is usually stretched at a temperature equal to or higher than the softening point of the polyolefin resin contained in the polyolefin resin composition and equal to or lower than the melting point of the polyolefin resin, preferably at a temperature within the range of (the melting of the polyolefin resin - 50)°C to the melting point of the polyolefin resin. When the is stretched at a temperature the above range, the resulting porous film can have excellent air permeability and ion permeability. For example, when the polyolefin resin composition to be used comprises a polyolefin resin mainly containing polyethylene, the stretching temperature is preferably 80 to 130°C, more preferably 90 to 115°C. It is also preferable to the film after stretching. The heat-setting is preferably performed at a temperature lower than the melting point of the polyolefin resin contained in the polyolefin resin composition.

The porous of the present invention produced by the method as described above has excellent uniformity in the film thickness and high strength and air permeability (ion permeability). When the film is used for a power storage device, particularly a battery, a battery halving improved battery properties can be obtained, and thus the film is suitable as a separator for a power storage device.

According to the present invention, a porous heat-resistant layer containing a heat-resistant resin and/or a filler is laminated on at least one surface of the porous film obtained by the method described above to produce a multilayer porous film. Such a multilayer porous film has very high heat-resistance and can be preferably used as a separator for a nonaqueous electrolyte secondary battery, in particular, a lithium ion secondary battery. The porous heat-resistant layer may be provided on one surface or both surfaces of the porous film. Hereinafter, the multilayer porous film will be explained.

The multilayer porous film usually has a thickness of not more than 40 $\mu$m, preferably, not more 20 When the thickness of the porous heat-resistant layer is defined as A ($\mu$m) and the thickness of the porous film is defined as B ($\mu$m), the ratio of A/B is preferably not less than 0.1 and not more than 1. Further, the multilayer porous film preferably has an air permeability of 50 to 300 second/100 cc, more preferably 50 to 200 second/100 cc, when measured by a Gurley method, from the viewpoint of ion permeability. The multilayer porous film usually has a porosity of 30 to 80% by volume, preferably 40 to 70% by volume. The porous film also has the air permeability and the porosity in these ranges.

The porous heat-resistant layer in the multilayer porous film contains a heat-resistant resin and/or a filler. In order to further increase the ion permeability, the porous heat-resistant layer is preferably a thin layer having a thickness not less than 1 $\mu$m and not more than 10 $\mu$m, more preferably not less than 1 $\mu$m and not more than 5 $\mu$m, particularly not less than 1 $\mu$m and not more than 4 $\mu$m. The porous heat-resistant layer usually has a pore size (diameter) of not more than 3 $\mu$m, preferably not more than 1 $\mu$m. The pore size can be measured according to a mercury intrusion method.

Examples of the heat-resistant resin contained in the porous heat-resistant layer include polyamides, polyimides, polyamideimides, polycarbonates, polyacetals, polysulfones, polyphenyl sulfides, polyether ether ketones, aromatic polyesters, polyether sulfones, and polyetherimides. From the viewpoint of further improvement of the heat-resistance, polyamides, polyimides, polyamideimides, polyether sulfones, and polyetherimides are preferable, and polyamides, polyimides and polyamideimides are more preferable. As the heat-resistant resin, nitrogen-containing aromatic polymers such as aromatic polyamides (para-oriented aromatic polyamide, meta-oriented aromatic polyamide), aromatic polyimides, and aromatic polyamideimides are still more preferable, and aromatic polyamides are especially preferable. Para-oriented aromatic polyamide (hereinafter sometimes referred to as a "para-aramid") is particularly preferable from the viewpoint of production. As the heat-resistant resin, poly-4-methylpentene-1 and a cyclic olefin polymer may also be exemplified. The use of the heat-resistant resin can increase the heat-resistance, that is, the thermal film-breaking temperature.

The thermal film-breaking temperature is usually not lower than 160°C although it depends on the kind of the heat-resistant resin. When a nitrogen-containing aromatic polymer is used as the heat-resistant resin, the thermal film-breaking temperature can be elevated to at most about 400°C. When poly-4-methylpentene-1 and a cyclic olefin polymer are used, the thermal film-breaking temperatures can be elevated to at most about 250°C and at most about 300°C, respectively.

The para-aramid can be prepared by condensation polymerization of a para-oriented aromatic diamine with a para-oriented aromatic dicarboxylic acid halide and substantially comprises repeating units in which the amide linkage is bonded to the aromatic ring at a para-position or an orientation position similar to the para-position (for example, an orientation position extending coaxially or in parallel in an opposite direction, such as 4,4'-biphenylene, 1,5-naphthalene, or 2,6-naphthalene). Examples of the para-aramid include para-aramids having a para-oriented structure or a structure similar to the para-oriented structure, such as poly(p-phenylene terephthalamide), poly(p-benzamide), poly(4,4-benzanilide terephthalamide), poly(p-phenylene-4,4'-biphenylene dicarboxylic acid amide), poly(p-phenylene-2,6-naphthalene dicarboxylic acid amide), poly(2-chloro-p-phenylene terephthalamide), and a p-phenylene terephthalamide/2,6-dichloro-p-phenylene terephthalamide copolymer.

A wholly aromatic polyimide produced by condensation polymerization of an aromatic diacid anhydride with an aromatic diamine is preferable as the aromatic polyimide. Specific examples of the diacid anhydride include pyromellitic dianhydride, 3,3',4,4'-diphenylsulfonetetracarboxylic dianhydride, 3,3',4,4'-benzophenonetetracarboxylic dianhydride, 2,2'-bis(3,4-dicarboxyphenyl)hexafluoropropane, and 3,3',4,4'-biphenyltetracarboxylic dianhydride. Examples of the diamine include oxydianiline, p-phenylene diamine, benzophenone diamine, 3,3'-methylenedianiline, 3,3'-diaminobenzophenone, 3,3'-diaminodiphenylsulfone, and 1,5'-naphthalene diamine. Polyimide soluble in a solvent is preferably used. An example of the polyimide is a polyimide which is a polycondensation product of 3,3',4,4'-diphenylsulfonetetracarboxylic dianhydride with an aromatic diamine.

Examples of the aromatic polyamideimide include a polyamideimide prepared by condensation polymerization of an aromatic dicarboxylic acid and an aromatic diisocyanate; and a polyamideimide prepared by condensation polymerization of an aromatic diacid anhydride and an aromatic diisocyanate. Specific examples of the aromatic dicarboxylic acid include isophthalic acid and terephthalic acid. Specific examples of the aromatic diacid anhydride include trimellitic anhydride. Specific examples of the aromatic diisocyanate include 4,4'-diphenylmethane diisocyanate, 2,4-tolylene diisocyanate, 2,6-tolylene diisocyanate, ortho-tolylene diisocyanate, and m-xyletie diisocyanate.

In the present invention, the porous heat-resistant layer may contain a heat-resistant resin and a filler. The filler may be any one of an organic powder, an inorganic powder, and a mixture thereof. Filler particles preferably have an average particle size of not less than 0.01 µm and not more than 1 µm. The shape of filler particles may be substantial sphere, plate, cylinder, needle, whisker or fiber, and particles having any one of these shaped can be used. Among them, substantially spherical particles are preferable because they can easily form uniform pores. The average particle size of the filler particles can be measured by analyzing a photograph taken by an electron microscope with a particle size measuring apparatus. The shape of the filler particles can also be confirmed using an electron microscope.

Examples of the organic powder as the filler include powders composed of organic materials, for example, homo- or copolymers of styrene, vinyl ketone, acrylonitrile, methyl methacrylate, ethyl methacrylate, gylcidyl methacrylate, glycidyl acrylate, methyl acrylate, and the like; fluorine-containing resins such as polytetrafluoroethylene, a tetrafluoroethylene-hexafluoropropylene copolymer, a tetrafluoroethylene-ethylene copolymer, and polyvinylidene fluoride; melamine resins; urea resins; polyolefins; and polymethacrylates. The organic powders may be used alone or as a mixture of two or more of them. Among these organic powders, a polytetrafluoroethylene powder is preferable from the viewpoint of chemical stability.

Examples of the inorganic powder as the filler include powders composed of inorganic materials, for example, metal oxides, metal nitrides, metal carbides, metal hydroxides, carbonates, and sulfates. Specifically, powders composed of alumina, silica, titanium dioxide, and calcium carbonate be exemplified. The inorganic may be used alone or as a mixture of two or more of them. Among these inorganic powders, alumina is preferable from the viewpoint of chemical stability, A filler composed of alumina particles alone is preferable, and a filler composed of alumina particles alone particle or which is partly or wholly substantially spherical is more preferable.

When the porous heat-resistant layer contains the heat-resistant resin and the filler, the content of the filler in the porous heat-resistant layer is as follows although it depends on the specific gravity of the material of the filler. For example, when all of the filler particles are alumina particles, the amount of the filler is usually not less than 20 parts buy weight and not more than 95 parts by weight, preferably not less than 30 parts by weight and not more than 90 parts by weight, based on 100 parts by weight of the total weight of the porous heat-resistant layer. The amount of the filler can be suitably determined according to the specific gravity of the material of the filler.

In the multilayer porous film, the porous heat-resistant layer may be formed by applying a coating liquid to the porous film. For example, when a para-aramid is used as the heat-resistant resin, the para-aramid is dissolved in a polar organic solvent and the resulting solution is used as a coating liquid. Examples of the polar organic solvent include polar amide solvents and polar urea solvents. Specific examples thereof include, but not limited to, N,N-(hmethylformamide, N,N-dimethylacetamide, N-methyl-2-pyrrolidone, and tetramethylurea.

When a polyimide is used as the heat-resistant resin, a polyimide soluble in a solvent is preferable used as described above. An example of the polyimide soluble in a solvent is a polyimide which is a polycondensate of 3,3',4,4'-diphenylsulfone tetracarboxylic dianhydride and an aromatic diamine. As the polar organic solvent capable of dissolving the polyimide, dimethylsulfoxide, cresol, and o-chlorophenol may be preferably used besides those exemplified as the solvent capable of dissolving the aramid.

As a method of laminating the porous heat-resistant layer on the porous film, a method of separately producing the porous heat-resistant layer and then laminating the layer on the porous film and a method of applying a coating liquid containing the heat-resistant resin to at least one surface of the porous film to laminate the porous heat-resistant layer on the film may be exemplified, and the latter method is preferable from the viewpoint of productivity. When a coating liquid containing the heat-resistant resin and the filler is used in the latter method, a method comprising the following steps can be specifically exemplified:

(a) a step of preparing a slurry coating liquid in which 1 to 1500 parts by weight of a filler based on 100 parts by weight of a heat-resistant resin is dispersed in a polar organic solvent solution containing 100 parts by weight of the heat-resistant resin;
(b) a step of shaping a coating film by applying the coating liquid to at least one surface of the porous film; and
(c) a step of precipitating the heat-resistant resin from the coating film by means of humidification, solvent removal, or immersion in a solvent incapable of dissolving the heat-resistant resin, and, if necessary, drying the coating liquid.

Preferably, the coating liquid is continuously applied with a coating apparatus described in JP-A-2001-316006 by a method described in JP-A-2001-23602.

The porous heat-resistant layer may contain the filler but no heat-resistant resin. In this case, the inorganic powders described above are preferably used as the filler. Among them, the powders having high heat stability such as metal oxides, metal nitrides, and metal carbides are more preferably used. For example, a mixture of the filler and a binder may be applied to the porous film to obtain a multilayer porous film. In this case, a water-insoluble binder may be used as the binder. The porous heat-resistant layer can be easily laminated using the water-insoluble binder, the filler and the organic solvent. Examples of the water-insoluble binder include polytetrafluoroethylene (PTFE), polyvinylidene fluoride (PVDF), polyacrylonitrile (PAN), and styrene-butadiene rubber (SBR).

The multilayer porous film of the present invention has excellent uniformity in film thickness, and high heat-resistance, strength and air permeability (ion permeability). When the film is used for a power storage device, particularly a battery, a battery having improved battery properties can be obtained, and therefore the film can be preferably used as a separator for the power storage device. Further, the film can be particularly preferably used as a separator for a battery such as a nonaqueous electrolyte secondary battery, in particular a lithium ion secondary battery.

In the present invention, the power storage device (a battery such as a nonaqueous electrolyte secondary battery or a capacitor) may be produced by a known method except that the porous film or the multilayer porous film of the present invention is used as the separator. For example, a nonaqueous electrolyte secondary battery may be produced by laminating a positive electrode sheet obtained by applying an electrode mixture for a positive electrode to a positive electrode collector, a separator and a negative electrode sheet produced by applying an electrode mixture for a negative electrode to a negative electrode collector in this order, winding the resulting laminate to form an electrode unit, placing the electrode unit in a can or a container, and impregnating the electrode unit with an electrolytic solution comprising an electrolyte dissolved in an organic solvent. When the separator has the porous heat-resistant layer, the heat-resistant layer may be brought into contact with either the positive electrode sheet or the negative electrode sheet. When the heat-resistant layers are provided on both surfaces of the porous film, the two heat-resistant layers can be brought into contact with the positive electrode sheet and the negative electrode sheet, respectively. The cross-sectional shape of the electrode unit may be a circle, an oval, a rectangle, and a rectangle the corners of which are rounded off when the electrode unit is cut along a plane vertical to the winding axis of the electrode unit. Examples of the shape of the lithium ion secondary battery include a paper shape, a coin shape, a cylinder shape, and a prismatic column shape.

EXAMPLES

(1) Gurley Value

The Gurley value (second/100 cc) of a film was measured in accordance with JIS P 8117, using a B-type densometer (manufactured by Toyo Seiki Seisaku-Sho, Ltd.). Measurements were taken at 50 arbitrary points and an average value, a standard deviation and a coefficient of fluctuation were calculated.

(2) Film Thickness

A film thickness was measured in accordance with JIS K 7130 using VL-50A manufactured by Mitsutoyo Corporation. Measurements were taken at 50 arbitrary points and an average value, a standard deviation and a coefficient of fluctuation were calculated.

(3) Measurement of Molecular Chain Length and Molecular Weight by GPC

As a measuring apparatus, a gel chromatograph Alliance GPC 2000 manufactured by Waters Corporation was used. Other conditions were as follows:

Column: TSK gel GMHHR-H(S)HT 30 cm × 2, TSKgel GMH 6-HTL 30cm × 2,

both manufactured by Tosoh Corporation
Mobile Phase: o-Dichloiobenzene
Detector: Differential refractometer
Flow Rate: 1.0 mL/min.
Column Temperature: 140°C
Amount Injected: 500 μL

Thirty (30) mg of a sample was completely dissolved in 20 mL of o-dichlorobenzene at 145°C and then the resulting solution was filtered through a sintered filter having a pore size of 0.45 μm to give a filtrate as a feed liquid. A calibration curve was drawn using 16 standard polystyrene samples each having a known molecular weight.

(4) Average Particle Size of Water-Soluble Filler

A filler was observed with a scanning electron microscope (S-4200 manufactured by Hitachi, Ltd.) at a magnification of 30,000 and the diameters of 100 particles were measured. The average value thereof was defined as an average particle size (μm).

(5) Piercing Strength

A porous film was fixed with a 12 mm Φ washer and pierced with a pin at a rate of 200 mm/min. The maximum stress (gf) during piercing was defined as the piercing strength of the film. The pin used had a diameter of 1 mm Φ and a tip of 0.5 R.

(6) Inherent Viscosity of Para-aramid

A polymer liquid of a para-aramid was dropwise added to water, and the mixture was pulverized in a mixer and filtered to recover a para-aramid polymer. Next, 0.5 g of the para-aramid polymer which was dried at 300°C for 1 hour in vacuum was dissolved in 100 ml of 98% sulfuric acid. Flow times of the sulfuric acid solution of para-aramid and 98% sulfuric acid were measured at 30°C using a capillary viscometer and the inherent viscosity was calculated according to the following equation from the ratio of the flow times measured:

$$\text{Inherent viscosity} = \ln(T/T0)/C \ [\text{dl/g}]$$

wherein T and T0 are the flow time of the sulfuric acid solution of para-aramid and sulfuric acid, respectively, and C is the concentration (g/dl) of the para-aramid in the sulfuric acid solution of para-aramid.

(7) Analysis of Fatty Acid Component in Porous Film

The amount of the fatty acid component remaining in the porous film produced was determined according to a thermal extraction-GCMS method. The apparatuses used for the analysts were Pyrolyzer: PY-2020 D (manufactured by Frontier Laboratories Ltd.). Cryotrap: MJT-1030E (manufactured by Frontier Laboratories Ltd.), and GCMS: Agilent 5973.

Five (5) mg of a porous film sample was added to the Pyrolyzer, which was already heated to 100°C, and then the Pyrolyzer was heated to 300°C at a heating rate of 30°C/min., during which a GCMS measurement (SIM mode) was performed with respect to the fatty acid component which volatilized during heating. Helium gas used as the carrier gas was flowed at a flow rate of 1.0 ml/min. Concurrently with the production of the porous film sample, ethanol solutions of various fatty acid components were prepared, and the GCMS measurements (SIM mode) were performed using the solutions as standard solutions, whereby a calibration curve was drawn. The amount of the fatty acid component remaining in the porous film was estimated from the obtained calibration curve.

(8) Production of Sheet by Shaping Polyolefin Resin Composition Production of Sheet (1)

In a Henschel mixer, 100 parts by weight of a polyethylene powder (Hi-Zex Million 340M manufactured by Mitsui Chemicals, Inc., weight average molecular chain length: 17000 nm, weight average molecular weight: 3,000,000, melting point: 136°C) was mixed with 43 parts by weight of an olefin wax powder (HI-WAX-110P manufactured by Mitsui Chemicals, Inc., weight average molecular weight: 1000, melting point: 110°C) and 150 parts by weight of calcium carbonate (Vigot 10 manufactured by Shiraishi Calcium Kaisha, Ltd., average particle size: 0.15 μm measured with SEM, containing a fatty acid component), and then the mixture was kneaded in a twin-screw kneader to obtain a polyolefin resin composition. The polyolefin resin composition was calendered through a pair of rolls having a surface temperature of 151°C and revolving at the same circumferential velocity to produce a sheet (1) having a film thickness of about 70 μm. The thickness precision of the sheet (1) within ± 2 μm and the sheet contained 30% by weight of a polyolefin resin having a molecular chain length of not less than 2850 nm based on 100% by weight of the polyolefin resin contained in the polyolefin resin composition.

Example 1

Calcium carbonate was removed from the sheet (1) using the apparatus shown in Fig. 1. The sheet (1) was conveyed by rolls to a bath (a) containing an aqueous hydrochloric acid solution (2 to 4 mol/L of hydrogen chloride, 0.1 to 0.5% by weight of a nonionic surfactant) and the sheet was immersed in the bath (a) for 15 minutes to remove calcium carbonate. Subsequently, the sheet was immersed in a bath (b) containing an aqueous sodium hydroxide solution (concentration: 0.1 to 2 mol/L) for 2 minutes and the neutralization step was repeated three times. After the sheet was washed with water containing 10% of isopropanol in a bath (c) for 60 minutes, it was dried by being brought into contact with a roll heated to 50°C, wound, and stretched at a draw ratio of 8 (stretching temperature: 103°C) with a tenter (not shown).

Analysis of Fatty Acid Component in Porous Film

The amount of the fatty acid component remaining in the porous film thus produced was quantitatively analyzed according to the thermal extraction-GCMS method. The results are shown in Table 1.

Production of Battery

The porous film thus produced was wound together with a positive electrode sheet containing 92% of lithium cobaltate as an active material and a negative electrode sheet containing 98% of carbon as an active material to form a wound member, which was impregnated with an electrolytic solution containing an $LiPF_6$ salt at a concentration of 1.3 mol/L to produce a 18650 type cylindrical battery.
After the predetermined aging was performed using a charge-discharge tester, the discharge capacity of the battery was measured at discharge rates of 0.2 C, 1 C, 2 C, and 3 C. The results are shown in Table 2.

High-temperature Storage Test

The battery charged to 4.25 V was stored in a thermostat of 70°C for one week and then the discharge capacity and the load characteristics were measured at discharge rates of 0.2 C, 1 C, 2 C, and 3 C. The results are shown in Table 2.

Example 2

A porous film was obtained in the same manner as in Example 1, except that the temperature of the bath (c) was elevated to 45°C. The amount of the fatty acid component remaining this porous film is shown in Table 1 and evaluation results of a battery produced using the porous film are shown in Table 2.

Example 3

Synthesis of Para-aiamid (poly(p-phenylene terephthalamide))

Poly(p-phenylene terephthalamide) prepared using a 3 L separable flask equipped with stirring blades, a thermometer, a nitrogen inlet tube, and a powder charging port. The flask was fully dried, to which 2200 g of N-methyl-2-pyrrolidone (NMP) was added, and 151.07 g af a calcium chloride powder which was already dried in vacuum at 200°C for 2 hours was added thereto. The temperature of the mixture was elevated to 100°C, whereby the components were completely dissolved. The temperature of the mixture was lowered to room temperature. To the mixture, 68.23 g of p-phenylene diamine was added and completely dissolved. While the solution was kept at 20°C $\pm$ 2°C, 10 aliquots of 124.97 g of terephthalic acid dichloride were added every about 5 minutes. Then, the solution was aged for 1 hour while the solution was kept at 20°C $\pm$ 2°C with stirring. The solution was filtered through a 1500-mesh stainless steel gauze. The obtained solution was in a liquid crystal phase having a para-aramid concentration of 6% and had optical anisotropy. A portion of the para-aramid solution was sampled and re-precipitated with water. The obtained para-aramid had an inherent viscosity of 2.01 dl/g.

Preparation of Coating Liquid

In a flask, 100 g of the para-aramid solution, which was previously polymerized, was weighed and 243 g of NMP was added thereto to finally prepare an isotropic phase solution having a para-aramid concentration of 1.75% by weight. The solution was then stirred for 60 minutes. The solution having a para-aramid concentration of 1.75% by weight was mixed with 6 g (per 100 g of the para-aramid) of Alumina C (manufactured by Nippon Aerosil Co., Ltd.) and 6 g (per 100 g of the para-aramid) of Advanced Alumina AA-03 (manufactured by Sumitomo Chemical Co., Ltd.), and the mixture was stirred for 240 minutes. The coating dope in which fine alumina particles were thoroughly dispersed was filtered through a 1000-mesh metal gauze. Alter that, 0.73 g of calcium oxide was added to the coating dope, and the mixture was stirred for 240 minutes for neutralization. It was defoamed under reduced pressure to obtain a slurry coating liquid.

Production of Multilayer Porous Film (Continuous Method)

The wound member of the porous film (with: 300 mm, length: 300 m) produced in Example 2 was attached to an unwinder and the coating liquid was applied thereto while the porous film was unwound at a tension of 2 kg/300 mm and a line speed of 4 m/min., to continuously produce a multilayer porous film.

Firstly, NMP was applied to the lower surface of the unwound porous film with a micro-gravure coater, while the prepared coating liquid prepared in the above was applied to the upper surface with a bar coater in a thickness of 100 μm. The film was passed through a 1.5 m-long constant temperature and humidity chamber (temperature: 50°C, relative humidity: 70%), so as to precipitate the para-aramid from the coating liquid applied. Subsequently, the film was passed through a water-washing apparatus having a line length of 4 m (having a bath filled with ion-exchanged water and provided with guide rolls inside, to and from which ion-exchanged water is supplied and discharged at a rate of 10 L/min.), whereby NMP and calcium chloride were removed. After that, the film was passed over a heating roll (diameter: 1 m, surface temperature: 70°C, covered with meta-aramid fabric canvas) while blowing hot air using a Yankee dryer to remove water. Thus, a dry multilayer porous film having a porous heat-resistant layer laminated on one surface of the porous film was produced. The multilayer porous film had a thickness of 16 μm and an air permeability of 270 seconds/100 cc.

The amount of the fatty acid components remaining in the multilayer porous film is shown in Table 1 and the evaluation results of a battery produced using the multilayer porous film are shown in Table 2.

[Comparative Example 1]

A porous film was produced in the same manner as in Example 1. except that the film was washed with pure water for 5 minutes in the bath (c), The amount of the fatty acid components remaining in the porous film is shown in Table 1 and the evaluation results of a battery produced using the porous film are shown in Table 2.

In any of Examples 1 to 3 and Comparative Example 1, no fatty acid component other than stearic acid and palmitic acid was detected.

Table 1

| | Film thickness | Stearic acid | Palmitic acid | Total amount of fatty acid components |
|---|---|---|---|---|
| | μm | % by weight | % by weight | % by weight |
| Example 1 | 12.5 | 0.1 | 0.05 | 0.15 |
| Example 2 | 12.5 | 0.04 | 0.02 | 0.06 |
| Example 3 | 16.0 | 0.03 | 0.01 | 0.04 |
| Comparative Example 1 | 12.5 | 2 | 1 | 3 |

[Table 2]

| | Discharge capacity before storage | | | | Discharge capacity after 1-week storage | | | | Load characteristic after storage | | |
|---|---|---|---|---|---|---|---|---|---|---|---|
| | 0.2 C | 1 C | 2 C | 3 C | 0.2 C | 1 C | 2 C | 3 C | 1 C/ 0.2 C | 2 C/ 0.2 C | 3 C/ 0.2 C |
| Example 1 | 1.89 | 1.86 | 1.88 | 1.87 | 1.80 | 1.76 | 1.72 | 1.66 | 0.98 | 0.96 | 0.92 |
| | 1.89 | 1.85 | 1.86 | 1.86 | 1.80 | 1.78 | 1.74 | 1.68 | 0.99 | 0.97 | 0.94 |
| Example 2 | 1.90 | 1.86 | 1.87 | 1.87 | 1.81 | 1.78 | 1.75 | 1.70 | 0.98 | 0.97 | 0.94 |
| | 1.90 | 1.87 | 1.88 | 1.87 | 1.80 | 1.77 | 1.73 | 1.68 | 0.98 | 0.96 | 0.93 |
| Example 3 | 1.84 | 1.80 | 1.81 | 1.81 | 1.75 | 1.72 | 1.69 | 1.65 | 0.98 | 0.96 | 0.94 |
| | 1.85 | 1.81 | 1.82 | 1.81 | 1.74 | 1.71 | 1.68 | 1.63 | 0.98 | 0.96 | 0.93 |
| Comparative Example 1 | 1.86 | 1.81 | 1.83 | 1.84 | 1.81 | 1.74 | 1.66 | 1.58 | 0.97 | 0.92 | 0.88 |
| | 1.79 | 1.79 | 1.80 | 1.81 | 1.78 | 1.71 | 1.61 | 1.51 | 0.96 | 0.90 | 0.85 |

As described above, the porous films and multilayer porous films capable of improving the battery properties (the properties of a power storage device) were obtained according to the present invention. The batteries produced using the porous film or the multilayer porous film of the present invention had better properties than those of conventional one (comparative example).

Industrial Applicability

According to the present invention, a porous film capable of improving properties of a power storage device when being used for a separator and a multilayer porous film comprising the porous film can be provided.

**Claims**

1. A porous film comprising a polyolefin resin, and not less than 0.001% by weight and not more than 2% by weight of at least one fatty acid component selected from the group consisting of saturated fatty acids, unsaturated fatty acids and metal salts of said fatty acids, the number of the carbon atoms of the fatty acid component being within the range of not less than 12 and not more than 24.

2. The porous film according to claim 1, which is obtainable by shaping a polyolefin resin composition into a sheet, the composition comprising 100 parts by weight of a polyolefin resin, at least one fatty acid component selected from the group consisting of saturated fatty acids, unsaturated fatty acids and metal salts of said fatty acids, the number of the carbon atoms of the fatty acid component being within the range of not less than 12 and not more than 24, and 100 to 400 parts by weight of a water-soluble filler, then
bringing the sheet into contact with an aqueous liquid to remove the water-soluble filler from the sheet, and stretching the sheet,
in which film, the residual amount of the fatty acid component in the film is not less than 0.001% by weight and not more than 2% by weight.

3. The porous film according to claim 1, wherein the polyolefin resin is a polyethylene resin.

4. A multilayer porous film in which a porous heat-resistant layer comprising a heat-resistant resin and/or a filler is laminated on the porous film according to claim 1.

5. The multilayer porous film according to claim 4, wherein the heat-resistant resin is a nitrogen-containing aromatic polymer.

6. A separator comprising the porous film according to claim 1.

7. A separator comprising the multilayer porous film according to claim 4.

8. A power storage device comprising the separator according to claim 6.

9. A nonaqueous electrolyte secondary battery comprising the separator according to claim 6.

Fig. 1

| INTERNATIONAL SEARCH REPORT | International application No. |
|---|---|
| | PCT/JP2009/053477 |

A.    CLASSIFICATION OF SUBJECT MATTER
*C08J9/00*(2006.01)i, *C08J9/26*(2006.01)i, *C08K5/09*(2006.01)i, *C08L23/00* (2006.01)i, *H01M2/16*(2006.01)i

According to International Patent Classification (IPC) or to both national classification and IPC

B.    FIELDS SEARCHED

Minimum documentation searched (classification system followed by classification symbols)
C08J9/00, C08J9/26, C08K5/09, C08L23/00, H01M2/16

Documentation searched other than minimum documentation to the extent that such documents are included in the fields searched
Jitsuyo Shinan Koho          1922-1996    Jitsuyo Shinan Toroku Koho    1996-2009
Kokai Jitsuyo Shinan Koho    1971-2009    Toroku Jitsuyo Shinan Koho    1994-2009

Electronic data base consulted during the international search (name of data base and, where practicable, search terms used)

C.    DOCUMENTS CONSIDERED TO BE RELEVANT

| Category* | Citation of document, with indication, where appropriate, of the relevant passages | Relevant to claim No. |
|---|---|---|
| X | JP 2006-273987 A  (Sumitomo Chemical Co., Ltd.), 12 October, 2006 (12.10.06), Claims; examples 1, 5 (Family: none) | 1-9 |
| X | JP 2002-69221 A  (Sumitomo Chemical Co., Ltd.), 08 March, 2002 (08.03.02), Claims; examples 1, 2 & US 2002/0034689 A1     & EP 1168469 A2 & CA 2350379 A             & CN 1331496 A | 1-9 |
| X | JP 2003-105120 A  (Sumitomo Chemical Co., Ltd.), 09 April, 2003 (09.04.03), Claims; examples 1, 2 (Family: none) | 1-3,6-9 |

[X]    Further documents are listed in the continuation of Box C.          [ ]    See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12 May, 2009 (12.05.09) | 19 May, 2009 (19.05.09) |

| Name and mailing address of the ISA/ Japanese Patent Office | Authorized officer |
|---|---|
| Facsimile No. | Telephone No. |

Form PCT/ISA/210 (second sheet) (April 2007)

**INTERNATIONAL SEARCH REPORT**

| International application No. |
| --- |
| PCT/JP2009/053477 |

C (Continuation).    DOCUMENTS CONSIDERED TO BE RELEVANT

| Category* | Citation of document, with indication, where appropriate, of the relevant passages | Relevant to claim No. |
| --- | --- | --- |
| X | JP 2004-139933 A  (Mitsubishi Plastics, Inc.), 13 May, 2004 (13.05.04), Synthesis examples 1, 2 (Family: none) | 1-3,6-9 |
| A | JP 61-264032 A  (Mitsubishi Chemical Industries Ltd.), 21 November, 1986 (21.11.86), Examples (Family: none) | 1-9 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002069221 A
- JP 2006307163 A
- JP 2001316006 A
- JP 2001023602 A